# EUROPÄISCHE PATENTSCHRIFT

(11) **EP 4 103 395 B1**
(45) Veröffentlichungstag und Bekanntmachung des Hinweises auf die Patenterteilung: **14.02.2024**
(21) Anmeldenummer: 20820800.9
(22) Anmeldetag: 30.11.2020
(51) Int. Cl.: B29D 30/06, B29B 17/02, B29B 17/04, B29L 30/00

(54) **REIFENDICHTMITTEL, FAHRZEUGLUFTREIFEN AUFWEISEND DAS DICHTMITTEL UND VERFAHREN ZUR DETEKTION EINES FAHRZEUGLUFTREIFENS MIT DICHTMITTELLAGE SOWIE ZUM RECYCLING EINES FAHRZEUGLUFTREIFENS MIT DICHTMITTEL**
TYRE SEALANT, VEHICLE PNEUMATIC TYRE COMPRISING THE SEALANT, AND METHOD FOR DETECTING A VEHICLE PNEUMATIC TYRE COMPRISING A SEALANT AND FOR RECYCLING A VEHICLE PNEUMATIC TYRE COMPRISING A SEALANT
MATÉRIAU D'ÉTANCHÉITÉ DE PNEUMATIQUE, PNEUMATIQUE DE VÉHICULE COMPRENANT LE MATÉRIAU D'ÉTANCHÉITÉ, ET PROCÉDÉ DE DÉTECTION D'UN PNEUMATIQUE DE VÉHICULE COMPRENANT UN MATÉRIAU D'ÉTANCHÉITÉ ET DE RECYCLAGE D'UN PNEUMATIQUE DE VÉHICULE COMPRENANT UN MATÉRIAU D'ÉTANCHÉITÉ

(30) Priorität: 10.02.2020 DE 102020201584
(43) Veröffentlichungstag der Anmeldung: 21.12.2022
(73) Patentinhaber: Continental Reifen Deutschland GmbH, 30165 Hannover (DE)
(72) Erfinder: DOROSHENKO, Mikheil, 30165 Hannover (DE); TYBURSKI, Andreas, 30165 Hannover (DE)
(74) Vertreter: Continental Corporation
(86) Internationale Anmeldenummer: PCT/EP2020/083931
(87) Internationale Veröffentlichungsnummer: WO 2021/160311

(56) Entgegenhaltungen:
- EP-A1- 3 564 022
- DE-A1-102006 059 286
- US-B1- 6 508 898

## Beschreibung

Die Erfindung betrifft ein selbsttätig abdichtendes Reifendichtmittel und einen Fahrzeugluftreifen aufweisend das Dichtmittel sowie ein Verfahren zur Detektion eines Fahrzeugluftreifens mit Dichtmittel sowie ein Verfahren zum Recycling eines Fahrzeugluftreifens mit Dichtmittel.

Selbstdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das selbsttätig abdichtende Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.

Das Dichtmittel zeichnet sich durch Luftdichtigkeit, starke Klebrigkeit und ausgewogenes Fließverhalten aus.

EP 3 564 022 A1 betrifft ein klebriges, selbsttätig abdichtendes Reifendichtmittel, welches wenigstens ein recyceltes Material in Form von Partikeln enthält.

Die starke Klebrigkeit des Dichtmittels erschwert jedoch das Recycling der Reifen. Üblicherweise werden Reifen -ohne Dichtmittel- beim Recycling zunächst zerkleinert. Sollte sich unter den Reifen einer befinden, der ein Dichtmittel aufweist, so ist das Zerkleinern durch die Klebrigkeit des Dichtmittels stark erschwert, da das Dichtmittel an der Zerkleinerungsvorrichtung klebt und die weitere Zerkleinerung immer weiter erschwert.

Optisch sind Fahrzeugluftreifen mit und ohne Dichtmittel auf den ersten Blick nicht oder kaum voneinander zu unterscheiden, da das Dichtmittel meist als schwarze Masse auf der schwarzen Innenwand des Reifens angebracht ist. Die Reifen müssten somit genauer Stück für Stück betrachtet werden.

Insbesondere bei einer Vielzahl von Reifen wäre aber eine individuelle Sichtung eines j eden Reifens durch einen Operator sehr aufwändig.

Der vorliegenden Erfindung liegt die Aufgabe zugrunde, ausgehend vom Stand der Technik ein selbsttätig abdichtendes Reifendichtmittel und einen Fahrzeugluftreifen aufweisend das Reifendichtmittel bereitzustellen, wobei das Reifendichtmittel einfacher und zuverlässiger detektiert werden kann.

Gelöst wird diese Aufgabe dadurch, dass das Dichtmittel wenigstens ein Lumineszenzagens enthält.

Dadurch, dass das Dichtmittel wenigstens ein Lumineszenzagens enthält, können die Reifen aufweisend das Dichtmittel einfacher von Fahrzeugluftreifen ohne Dichtmittel unterschieden werden.

Insbesondere kann die Unterscheidung in einem automatisierten Verfahren nach erfolgter Energiezufuhr mit einem Detektor, insbesondere einer Photodiode, erfolgen, ohne dass eine individuelle Sichtung des Reifens durch einen Operator notwendig ist.

Ferner kann aber auch ein Operator einen derartigen Reifen mit Dichtmittel durch die Lumineszenz schneller und eindeutiger erkennen.

Hierdurch ist das Recycling von Fahrzeugluftreifen mit Dichtmittel vereinfacht und erleichtert.

Die Vorgänge der Detektion mittels Detektors und Erkennung durch einen Operator werden im Rahmen der vorliegenden Erfindung beide mit "Detektieren" bezeichnet.

Ein weiterer Gegenstand der vorliegenden Erfindung ist somit wie eingangs genannt ein Fahrzeugluftreifen, der das erfindungsgemäße Reifendichtmittel inklusive aller genannten Ausführungen wenigstens auf der dem Laufstreifen gegenüberliegenden Innenfläche aufweist.

Im Folgenden wird die Erfindung weiter erläutert und weitere vorteilhafte Ausführungsformen beschrieben. Soweit nicht anders angegeben oder technisch nicht machbar, können verschiedene Ausführungsformen auch miteinander kombiniert werden.

Unter "Lumineszenzagens" wird eine Substanz / ein Agens verstanden, welches lumineszierende Eigenschaften aufweist. Derartige Substanzen sind auch unter dem Begriff "Fluorophore" bekannt.

Gemäß Römpp Online Chemie Lexikon (letzte Aktualisierung August 2008) versteht man "unter Lumineszenz ... die Emission von Licht im sichtbaren, UV- und IR-Spektralbereich von Gasen, Flüssigkeiten und Festkörpern nach Energiezufuhr".

Je nach Art der Energiezufuhr kann man beispielsweise zwischen Photolumineszenz, Chemilumineszenz, Thermolumineszenz und Radiolumineszenz unterscheiden.

Arten der Lumineszenz, die insbesondere durch Photolumineszenz verursacht werden, sind ferner Fluoreszenz und Phosphoreszenz, wobei nach der zeitlichen Dauer zwischen Anregung (Absorption von Licht) und der Lumineszenz ((Nach)Leuchten durch Emission) unterschieden wird.

Im Rahmen der vorliegenden Erfindung soll das "Lumineszenzagens" nicht von vornherein durch eine (formelle) Unterscheidung der verschiedenen Lumineszenzarten hinsichtlich Art der Anregung oder der Dauer der Emission eingeschränkt sein.

Gemäß vorteilhafter Ausführungsformen der Erfindung ist es bevorzugt, dass Lumineszenzagens durch Licht anregbar ist und damit als Photolumineszenzagens bezeichnet werden kann. Ferner ist es bevorzugt, dass das Lumineszenzagens fluoreszierende oder phosphoreszierende Eigenschaften aufweist und damit ein Fluoreszenzagens oder Phosphoreszenzagens ist.

Gemäß vorteilhafter Ausführungsformen der Erfindung ist es bevorzugt, dass das Lumineszenzagens Licht im Wellenlängenbereich von 200 bis 700 nm absorbiert und im Bereich von 350 bis 800 nm emittiert. Hierdurch kann es mit UV-Licht oder sichtbarem Licht angeregt werden und Licht in einem Bereich emittieren, der für Menschen sichtbar ist und/oder mittels einer Photodiode gemessen und damit detektiert werden kann.

Bei dem das Lumineszenzagens kann es sich prinzipiell um jegliche Substanz handeln, die lumineszierende Eigenschaften aufweist, und dabei beispielsweise ausgewählt ist aus der Gruppe umfassend
Kumarin-Derivate, wie Methoxykumarin,
Peptide oder Proteine, wie das grün fluoreszierende Protein (Abkürzung GFP; engl. "green fluorescent protein"),
Rhodamine,
organische Substanzen, die unter den Handelsnamen Alexa Fluor ^{®} erhältlich sind, wie zum Beispiel Alexa Fluor ^{®} 350, Alexa Fluor ^{®} 405, Alexa Fluor ^{®} 488, Alexa Fluor ^{®} 532, etc,
Quantenpunkte (engl. "quantum dots"), wie zum Beispiel QDOT ^{®} 525, QDOT ^{®} 565, QDOT ^{®} 665.

Insbesondere können sämtliche unter folgenden Quellen offenbarte Agenzien verwendet werden:
https://docs.abcam.com/pdf/immunology/fluorochrome_guide.pdf https://www.biosyn.com/Images/ArticleImages/Comprehensive%20fluorophore%201 ist.pdf
https://en.wikipedia.org/wiki/Fluorophore
https://en.wikipedia.org/wiki/Ethidium_bromide

Für den Fall, dass es sich bei dem Lumineszenzagens um ein Molekül handelt, beträgt das Gewichtsmittel des Molekulargewichtes (Mw) beispielsweise und insbesondere von 200 bis 250.000 g/mol.

Für den Fall, dass es sich bei dem Lumineszenzagens um Quantenpunkte handelt, beträgt die Teilchengröße (gemessen mit dynamischer Lichtstreuung) beispielsweise von 2 bis 2000 nm.

Erfindungswesentlich ist, dass das Dichtmittel wenigstens ein Lumineszenzagens enthält.

Hierbei können auch zwei oder mehrere verschiedene Agenzien vorhanden sein. "Wenigstens ein" bezieht sich auf die Art des Lumineszenzagens. Sämtliche Ausführungen gelten sowohl für das Vorhandensein einer Art an Lumineszenzagens oder zwei oder mehreren Arten an Lumineszenzagenzien, sofern nicht ausdrücklich anders dargestellt.

Dabei können bereits geringste Mengen die erwünschte lumineszierende Wirkung haben.

Gemäß vorteilhafter Ausführungsformen der Erfindung enthält das Dichtmittel von 1 bis 10 Gew.-% an Lumineszenzagenzien, wobei die geeignete Menge von der Zusammensetzung und insbesondere dem Farbton des Dichtmittels abhängt.

Insbesondere in dem Fall, in dem das Dichtmittel dunkel oder schwarz färbende Füllstoffe enthält, ist es bevorzugt eine größere Menge an Lumineszenzagenzien zu verwenden, wie beispielsweise 5 bis 10 Gew.-%.

Das Dichtmittel enthält gemäß vorteilhafter Ausführungsformen wenigstens einen Füllstoff, durch welchen es den schwarzen Farbton erhält. Hierbei kann es sich insbesondere um Ruß und/oder Graphit und/oder Graphen und/oder Kohlenstoffnanoröhrchen handeln.

Unter Ruß sind insbesondere Industrieruße und Pyrolyseruße zu verstehen. Besonders bevorzugt enthält das Dichtmittel wenigstens einen Ruß, ganz besonders bevorzugt wenigstens einen Industrieruß.

Dies hat den Vorteil, dass die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.

Als Ruße sind im Rahmen der vorliegenden Erfindung prinzipiell alle dem Fachmann bekannten Ruß-Typen denkbar.

Gemäß einer vorteilhaften Ausführungsform der Erfindung wird ein Ruß eingesetzt, der eine Jodadsorptionszahl gemäß ASTM D 1510 von 20 bis 180 g/kg, besonders bevorzugt 30 bis 140 g/kg, und eine DBP-Zahl gemäß ASTM D 2414 von 30 bis 200 ml/100 g, bevorzugt 90 bis 180 ml/100g, besonders bevorzugt 110 bis 180 ml/100g, aufweist.

Gemäß einer weiteren bevorzugten Ausführungsform der Erfindung wird ein Ruß des Typs N326 verwendet.

Es ist auch ein Gemisch von zwei oder mehreren Rußen denkbar.

Gemäß weiterer vorteilhafter Ausführungsformen enthält das Dichtmittel keinen Füllstoff, der es dunkel oder schwarz färbt. Gemäß dieser Ausführungsform der Erfindung kann dann eine vergleichsweise geringe Menge an Lumineszenzagenzien gewählt werden, wie beispielsweise 1 bis 2 Gew.-%.

Das Dichtmittel kann gemäß vorteilhafter Ausführungsformen zur Verstärkung wenigstens eine Kieselsäure (*engl.* "silica") enthalten. Kieselsäuren sind dem Fachmann als helle Füllstoffe für Reifenmischungen bekannt.

Hierdurch wird eine optimale Verstärkung des Dichtmittels erzielt und eine gute Viskositätskontrolle und -einstellung ermöglicht. Zudem wird mit wenigstens einer Kieselsäure die Kohäsion des Dichtmittels erhöht und die Klebrigkeit wird während des Herstellverfahrens erniedrigt. Gleichzeitig werden die Ortsfestigkeit und die Reißeigenschaften des Dichtmittels verbessert.

Es ist auch ein Gemisch von zwei oder mehreren Kieselsäuren denkbar.

Bei den Kieselsäuren kann es sich um die dem Fachmann bekannten Kieselsäuren, die als Füllstoff für Reifenkautschukmischungen geeignet sind, handeln. Als Kieselsäuren können somit z. B. sowohl jene des Typs Ultrasil^{®} VN3 (Handelsname) der Firma Evonik als auch Kieselsäuren mit einer vergleichsweise niedrigen BET-Oberfläche (wie z. B. Zeosil^{®} 1115 oder Zeosil^{®} 1085 der Firma Solvay) als auch hoch dispergierbare Kieselsäuren, so genannte HD-Kieselsäuren (z. B. Zeosil^{®} 1165 MP der Firma Solvay) verwendet werden.

Ferner ist ein Gemisch der genannten weiteren Füllstoffe denkbar und bevorzugt, wie insbesondere wenigstens ein Ruß in Kombination mit wenigstens einer Kieselsäure, wobei sich ebenfalls die genannten Vorteile ergeben.

Gemäß vorteilhafter Ausführungsformen enthält das Dichtmittel 1,0 bis 30 Gew.-%, bevorzugt 1 bis 10 Gew.-%, wenigstens eines Füllstoffs, wobei es sich bevorzugt um helle Füllstoffe, wie insbesondere Kieselsäuren handelt.

Bei dem Dichtmittel kann es sich um alle geeigneten und dem Fachmann bekannten Dichtmittelzusammensetzungen handeln, wie beispielsweise auf Silikonbasis, oder auf Basis von Polyurethan oder basierend auf der Vernetzung eines Kautschuks und/oder eines Polyolefins.

Gemäß einer vorteilhaften und beispielsweisen Ausführungsform enthält das Dichtmittel wenigstens einen Kautschuk.

Bei dem Kautschuk kann es sich um alle dem Fachmann bekannten Kautschuktypen handeln. Es ist auch ein Gemisch verschiedener Kautschuke denkbar.

Gemäß einer bevorzugten Ausführungsform der Erfindung handelt es sich bei dem Kautschuk um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR) und/oder Silikonkautschuk.

Diese Kautschuktypen sind für die Verarbeitungstemperaturen bei der Herstellung des Dichtmittels und später bei der Anwendung, insbesondere im Fahrzeugluftreifen, besonders gut geeignet.

Gemäß beispielhafter Ausführungsformen kann das Dichtmittel insbesondere natürliches und/oder synthetisches Polyisopren, bevorzugt natürliches Polyisopren, enthalten.

Hierbei kann beispielsweise fester Naturkautschuk (NR) mit flüssigem Polyisopren in Kombination verwendet werden.

Beispielsweise kann das Dichtmittel Naturkautschuk und Styrol-Butadien-Kautschuk (SBR), beispielsweise ESBR (emulsionspolymerisierten Styrol-Butadien-Kautschuk) enthalten. Die Vernetzung kann auf Peroxiden basieren und/oder auf einer Schwefelvernetzung. Beispielsweise kann Schwefel in Kombination mit peroxidischen Agenzien, wie beispielsweise "VAROX-Organic-Peroxide-Crosslinking-Agents", der Firma Vanderbilt Chemicals, LLC verwendet werden. Das Verhältnis von NR zu ESBR beträgt beispielsweise 30 bis 40 zu 60 bis 70 Gew.-%.

Gemäß weiteren beispielhaften Ausführungsformen handelt es sich um ein Silikonbasiertes Dichtmittel.

Gemäß einer vorteilhaften und beispielsweisen Ausführungsform basiert das Dichtmittel auf der Vernetzung eines Kautschuks und/oder Polyolefins. Für den Kautschuk gelten die obigen Ausführungen.

Dem Fachmann ist klar, dass sämtliche genannten Bestandteile im vernetzten Dichtmittel zumindest teilweise in chemisch veränderter Form, insbesondere als Derivate, vorliegen.

Besonders bevorzugt wird wenigstens Butylkautschuk (IIR) verwendet. Butylkautschuk eignet sich besonders gut, da er eine vergleichsweise hohe Luftdichtigkeit aufweist.

Gemäß einer besonders vorteilhaften Ausführungsform der Erfindung enthält das selbsttätig abdichtende Reifendichtmittel 40 bis 80 Gew.-% wenigstens eines Polyolefins. Hiermit wird ein optimales Fließverhalten bei einer gleichzeitig guten Herstellbarkeit (Prozessierbarkeit) des Dichtmittels erzielt.

Hiermit wird ein optimales Fließverhalten bei einer gleichzeitig guten Herstellbarkeit (Prozessierbarkeit) des Dichtmittels erzielt.

Das wenigstens eine Polyolefin weist bevorzugt ein Zahlenmittel der Molekulargewichtsverteilung Mn gemäß GPC von 400 bis 2500 g/mol, besonders bevorzugt 800 bis 2500 g/mol, ganz besonders bevorzugt 800 bis 1600 g/mol, wiederum bevorzugt 1200 bis 1600 g/mol, wiederum besonders bevorzugt 1200 bis 1400 g/mol, beispielsweise 1300 g/mol, auf.

Ein Polyolefin mit den genannten Bereichen für das Mn ist besonders geeignet, um die gewünschte Fließfähigkeit bei gleichzeitiger Abdichtwirkung des Dichtmittels im Pannenfall zu erzeugen.

Hierbei ist es besonders bevorzugt, dass das wenigstens eine Polyolefin wenigstens ein Polybuten ist.

Dieses stellt die Klebrigkeit des fertigen Dichtmittels ein und bestimmt die Fließfähigkeit im Produktionsprozess sowie die lokale Ortsfestigkeit des fertigen Dichtmittels.

Es kann sich auch um ein Gemisch zweier oder mehrerer Polybutene mit jeweils einem Mn von 400 bis 2500 g/mol handeln, wobei sich die Polybutene im Mn unterscheiden können.

Geeignete Polybutene, auch Polyisobutene genannt, sind beispielsweise unter den Handelsnamen Indopol^{®} Polybutene der Firma INEOS Capital Limited erhältlich. Es ist auch ein Gemisch wenigstens eines Polybutens mit wenigstens einem weiteren Polyolefin denkbar.

Bevorzugt basiert das Dichtmittel auf der Vernetzung durch wenigstens einen Vernetzer, der ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.

Bevorzugt basiert das Dichtmittel auf der Vernetzung durch wenigstens einen Vernetzer in Kombination mit einem Vernetzungsinitiator, wobei der Vernetzungsinitiator bevorzugt ausgewählt aus der Gruppe enthaltend Bleioxid und andere Metalloxide und peroxidische Verbindungen. Der Vernetzungsinitiator ist eine chemische Verbindung, welche die Vernetzung des Dichtmittels initiiert.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diaroylperoxiden, Diacylperoxiden und Peroxyestern.

Der Vernetzungsinitiator kann als reine Substanz oder in einem Gemisch zugegeben werden. Im Falle eines Gemisches, beispielsweise von 50 Gew.-% Dibenzoylperoxid in Dibutylmaleat, geht nur die Menge des enthaltenen Peroxides in die Menge an Vernetzungsinitiator mit ein, sodass in den angegebenen Mengen des wenigstens einen Vernetzungsinitiators Begleitsubstanzen wie Dibutylmaleat nicht eingerechnet sind.

Das Dichtmittel kann ferner weitere Bestandteile enthalten, wie insbesondere weitere Füllstoff(e), Klebrigmacher, Weichmacher, wie z. B. Öl(e), sowie gegebenenfalls weitere Zusatzstoffe, wie z. B. Farbpigmente und/oder Zinkoxid und/oder Schwefel.

Das Dichtmittel enthält gemäß vorteilhafter Ausführungsformen wenigstens einen Klebrigmacher, und zwar insbesondere für den Fall, dass das Dichtmittel nicht bereits aufgrund der enthaltenen Bestandteile, insbesondere der Polymere eine ausreichende Klebrigkeit aufweist. Unter "Klebrigmacher" wird prinzipiell jede Substanz verstanden, die die Klebrigkeit des Dichtmittels erhöht.

Gemäß vorteilhafter Ausführungsformen der Erfindung handelt es sich bei dem Klebrigmacher um wenigstens ein Kohlenwasserstoffharz.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist.

Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können.

Das Kohlenwasserstoffharz kann ein Homopolymer oder ein Copolymer sein. Unter Homopolymer wird in der vorliegenden Anmeldung ein Polymer verstanden, welches gemäß Römpp Online (Auszug vom 02.01.2017, letzte Aktualisierung des Artikels August 2008) "aus Monomeren nur einer Art entstanden ist".

Unter Copolymer wird im Rahmen der vorliegenden Erfindung ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z.B. auch ein Copolymer aus drei verschiedenen Monomeren sein.

Bei den Monomeren kann es sich um alle dem Fachmann bekannten Monomere von Kohlenwasserstoffharzen handeln, wie aliphatische Monomere, insbesondere aliphatische C₅-Monomere, weitere ungesättigte Verbindungen, die kationisch polymerisiert werden können, enthaltend Aromaten und/oder Terpene und/oder Alkene und/oder Cycloalkene.

Bevorzugte Monomere sind insbesondere C₅ und C₉-Monomere.

Bei den Aromaten (aromatische Monomere) kann es sich beispielsweise um alpha-Methylstyrol und/oder Styrol und/oder Vinyltoluol und/oder Inden und/oder Cumaron und/oder Methylinden und/oder Methylcumaron und/oder Phenol handeln. Bevorzugt handelt es sich bei den aromatischen Monomeren um alpha-Methylstyrol und/oder Styrol und/oder Vinyltoluol und/oder Inden und/oder Cumaron und/oder Methylinden und/oder Methylcumaron.

Gemäß Römpp Online ist der Begriff "Olefine" die "Gruppenbezeichnung für acyclische und cyclische aliphatische Kohlenwasserstoffe mit einer oder mehreren reaktiven C=C-Doppelbindungen im Molekül, die heute besser als Alkene bzw. Cycloalkene bezeichnet werden, in weiterem Sinne auch Bezeichnung für deren substituierte Derivate...." Im Rahmen der vorliegenden Erfindung werden daher ungesättigte Terpene, Alkene und Cycloalkene unter den Oberbegriff Olefine zusammengefasst.

Bei den Alkenen kann es sich beispielsweise um 1-Buten und/oder 2-Buten und/oder Butadien handeln.

Gemäß einer bevorzugten Ausführungsform der Erfindung handelt es sich bei dem Kohlenwasserstoffharz um wenigstens ein aliphatisches Harz, also ein Harz welches keine aromatischen Ringsysteme enthält. Ein derartiges Harz besteht zu 100 Gew.-% aus aliphatischen Monomeren bzw. dessen Derivaten.

Gemäß einer weiteren Ausführungsform der Erfindung besteht das Harz zu 10 bis 99 Gew.-%, bevorzugt 50 bis 99 Gew.-%, besonders bevorzugt 70 bis 99 Gew.-%, aus aliphatischen und zu 1 bis 90 Gew.-%, bevorzugt 1 bis 50 Gew.-%, besonders bevorzugt 1 bis 30 Gew.-% aus aromatischen Monomeren.

Gemäß einer bevorzugten Ausführungsform der Erfindung handelt es sich bei dem Kohlenwasserstoffharz um wenigstens ein Harz, welches wenigstens aus Cs-Monomeren aufgebaut ist und dem Fachmann als sogenanntes Cs-Harz bekannt ist. Hiermit werden besonders gute Eigenschaften des Dichtmittels, insbesondere ein optimiertes Fließverhalten bei gleichzeitig guter Klebrigkeit, erzielt.

Bei den aliphatischen Cs-Monomeren kann es sich um Monomere der C₅-Erdölfraktion, z.B. Isopren, und/oder Monomere der Terpene und/oder Cycloolefine und/oder Olefine, wie z.B. Penten, handeln. Unter C₅ ist zu verstehen, dass diese Monomere aus fünf Kohlenstoffatomen aufgebaut sind.

Ferner ist dem Fachmann bekannt, dass die Cs-Erdölfraktion außer aliphatischen Monomeren mit fünf Kohlenstoffatomen andere aliphatische Monomere (Bausteine) mit z.B. vier, also C₄-Monomere, oder sechs Kohlenstoffatomen, C₆-Monomere, enthalten kann.

Gemäß vorteilhafter Ausführungsformen der Erfindung enthält das Dichtmittel 2 bis 20 Gew.-% wenigstens eines Kohlenwasserstoffharzes als Klebrigmacher. Bevorzugt beträgt die Menge des wenigstens einen Kohlenwasserstoffharzes 2 bis 10 Gew.-%, besonders bevorzugt 5 bis 8 Gew%.

Mit derartigen bevorzugten und besonders bevorzugten Mengen werden die Klebrigkeit und die Viskosität des Dichtmittels weiter optimiert.

Gemäß vorteilhafter und beispielhafter Ausführungsformen der Erfindung enthält das Dichtmittel folgende Bestandteile in folgenden Mengen:
- 40 bis 80 Gew.-% wenigstes eines Polyolefins, bevorzugt wenigstens eines Polybutens, und
- 2,0 bis 20 Gew.-% wenigstens eines Kohlenwasserstoffharzes und
- 9,0 bis 15 Gew.-% wenigstens eines Kautschuks und
- 1 bis 10 Gew.-% wenigstens eines Lumineszenzagenzes und
- 1,0 bis 30 Gew.-% wenigstens eines Füllstoffs und
- 0,4 bis 1,0 Gew.-% wenigstens eines Vernetzers und
- 0,5 bis 2,5 Gew.-% wenigstens eines Vernetzungsinitiators.

Weitere Bestandteile sind insbesondere Weichmacher, wie Öle.

Beispielsweise enthält das Dichtmittel die folgenden Bestandteile:
- 70 Gew.-% Polybuten
- 3 Gew.-% Kohlenwasserstoffharz
- 10 Gew.-% Butylkautschuk
- 5 Gew.-% Lumineszenzagens, Rhodamine 6G
- 2 Gew.-% Kieselsäure, z. B. unter dem Handelsnamen Ultrasil^{®} der Firma Evonik
- 0,5 Gew.-% Vernetzer
- 1,5 Gew.-% Vernetzungsinitiator.

Die Angaben in Gew.-% beziehen sich jeweils auf die Gesamtmenge an Dichtmittel.

Das erfindungsgemäße Reifendichtmittel kann durch im Stand der Technik bekannte Verfahren hergestellt werden, wobei das wenigstens eine Lumineszenzagens in einer möglichen Vorstufe des Dichtmittels eingemischt wird.

Das Dichtmittel wird mittels dem Fachmann bekannten Verfahren und Vorrichtungen auf die Reifeninnenseite aufgebracht.

Ein weiterer Gegenstand der Erfindung ist ein Verfahren zur Detektion eines erfindungsgemäßen Fahrzeugluftreifens zum Unterscheiden von Fahrzeugluftreifen aufweisend ein Dichtmittel gegenüber Fahrzeugluftreifen ohne Dichtmittel.

Bei dem erfindungsgemäßen Verfahren wird die Dichtmittellage aufgrund des wenigstens einen Lumineszenzagenzes nach Energiezufuhr optisch von einem Operator oder mittels eines Detektors detektiert wird.

Bei dem Detektor kann es sich insbesondere um einer Photodiode handeln. Geeignete Detektoren sind dem Fachmann bekannt und sind üblicherweise computerunterstützt.

Es kann sich ferner um ein Handgerät handeln oder einen Detektor, der in einem automatisierten Verfahren über einen Roboter verwendet wird.

Ein weiterer Gegenstand der Erfindung ist ein Verfahren zum Recycling von erfindungsgemäßen Fahrzeugluftreifen umfassend wenigstens die folgenden Verfahrensschritte:
A) Bereitstellung des zu recycelnden Fahrzeugluftreifens;
B) Durchführung des erfindungsgemäßen Verfahrens zur Detektion eines erfindungsgemäßen Fahrzeugluftreifens aufgrund der Lumineszenz;
C) Abtrennen des Dichtmittels von dem Fahrzeugluftreifen;
D) anschließende Zerkleinerung des Fahrzeugluftreifens ohne Dichtmittel.

Gemäß vorteilhafter Ausführungsformen erfolgen die Verfahrensschritte A) bis D) automatisiert.

Ein weiterer Gegenstand der Erfindung ist ein Verfahren zum Recycling von Fahrzeugluftreifen umfassend wenigstens die folgenden Verfahrensschritte:
a) Bereitstellung von zu recycelnden Fahrzeugluftreifen;
b) Durchführung des erfindungsgemäßen Verfahrens zur Detektion eines erfindungsgemäßen Fahrzeugluftreifens, um Fahrzeugluftreifen mit Dichtmittel von Fahrzeugluftreifen ohne Dichtmittel zu unterscheiden;
c) Räumliche Separation von Fahrzeugluftreifen aufweisend ein Dichtmittel von Fahrzeugluftreifen ohne Dichtmittel;
d) Recycling von Fahrzeugluftreifen ohne Dichtmittel umfassend die Zerkleinerung der Fahrzeugluftreifen;
e) Überführung von Fahrzeugluftreifen aufweisend ein Dichtmittel zu einem separaten Recycling-Prozess umfassend das Abtrennen des Dichtmittels und erst die anschließende Zerkleinerung der Fahrzeugluftreifen.

Gemäß vorteilhafter Ausführungsformen erfolgen die Verfahrensschritte a) bis e) automatisiert. Gemäß einer vorteilhaften Ausführungsform der Erfindung, erfolgt Schritt c) in Verbindung mit Schritt b) automatisiert.

## Patentansprüche

1. Selbsttätig abdichtendes Reifendichtmittel, **dadurch gekennzeichnet, dass** es wenigstens ein Lumineszenzagens enthält.

2. Reifendichtmittel nach Anspruch 1, **dadurch gekennzeichnet, dass** das Lumineszenzagens ein Fluoreszenzagens oder Phosphoreszenzagens ist.

3. Reifendichtmittel nach einem der vorherigen Ansprüche, **dadurch gekennzeichnet, dass** das Lumineszenzagens Licht im Wellenlängenbereich von 200 bis 700 nm absorbiert und im Bereich von 350 bis 800 nm emittiert.

4. Reifendichtmittel nach einem der vorherigen Ansprüche, **dadurch gekennzeichnet, dass** die Menge an Lumineszenzagenzien 1 bis 10 Gew.-% beträgt, bezogen auf die Gesamtmenge an Dichtmittel.

5. Reifendichtmittel nach einem der vorherigen Ansprüche, **dadurch gekennzeichnet, dass** es wenigstens einen Füllstoff enthält, durch welches einen schwarzen Farbton erhält, wie insbesondere Ruß und/oder Graphit und/oder Graphen und/oder Kohlenstoffnanoröhrchen.

6. Reifendichtmittel nach einem der vorherigen Ansprüche, **dadurch gekennzeichnet, dass** es auf der Vernetzung eines Kautschuks und/oder Polyolefins basiert.

7. Fahrzeugluftreifen, der das Reifendichtmittel nach einem der Ansprüche 1 bis 6 wenigstens auf der dem Laufstreifen gegenüberliegenden Innenfläche aufweist.

8. Verfahren zur Detektion eines Fahrzeugluftreifens gemäß Anspruch 7 zum Unterscheiden von Fahrzeugluftreifen aufweisend ein Dichtmittel gegenüber Fahrzeugluftreifen ohne Dichtmittel, wobei das Dichtmittel aufgrund des wenigstens einen Lumineszenzagenzes nach Energiezufuhr optisch von einem Operator oder mittels eines Detektors, insbesondere einer Photodiode, erkannt wird.

9. Verfahren zum Recycling eines Fahrzeugluftreifens gemäß Anspruch 7, umfassend wenigstens die folgenden Verfahrensschritte:
A) Bereitstellung des Fahrzeugluftreifens gemäß Anspruch 7;
B) Durchführung des Verfahrens nach Anspruch 8;
C) Abtrennen des Dichtmittels von dem Fahrzeugluftreifen;
D) anschließende Zerkleinerung des Fahrzeugluftreifens ohne Dichtmittel.

10. Verfahren zum Recycling von Fahrzeugluftreifen umfassend wenigstens die folgenden Verfahrensschritte:
a) Bereitstellung von zu recycelnden Fahrzeugluftreifen;
b) Durchführung des Verfahrens nach Anspruch 8;
c) Räumliche Separation von Fahrzeugluftreifen aufweisend ein Dichtmittel von Fahrzeugluftreifen ohne Dichtmittel;
d) Recycling von Fahrzeugluftreifen ohne Dichtmittel umfassend die Zerkleinerung der Fahrzeugluftreifen;
e) Überführung von Fahrzeugluftreifen aufweisend ein Dichtmittel zu einem separaten Recycling-Prozess umfassend das Abtrennen des Dichtmittels und erst die anschließende Zerkleinerung der Fahrzeugluftreifen auf der dem Laufstreifen gegenüberliegenden Innenfläche aufweist.

## Claims

1. Self-sealing tyre sealant, **characterized in that** it contains at least one luminescent agent.

2. Tyre sealant according to Claim 1, **characterized in that** the luminescent agent is a fluorescent agent or a phosphorescent agent.

3. Tyre sealant according to either of the preceding claims, **characterized in that** the luminescent agent absorbs light in the wavelength range from 200 to 700 nm and emits light in the range from 350 to 800 nm.

4. Tyre sealant according to any of the preceding claims, **characterized in that** the amount of luminescent agents is 1% to 10% by weight based on the total amount of sealant.

5. Tyre sealant according to any of the preceding claims, **characterized in that** it contains at least one filler which gives it a black hue, such as in particular carbon black and/or graphite and/or graphene and/or carbon nanotubes.

6. Tyre sealant according to any of the preceding claims, **characterized in that** it is based on the crosslinking of a rubber and/or polyolefin.

7. Pneumatic vehicle tyre which comprises the tyre sealant according to any of Claims 1 to 6 at least on the inner surface opposite the tread.

8. Process for detecting a pneumatic vehicle tyre according to Claim 7 for distinguishing pneumatic vehicle tyres comprising a sealant from pneumatic vehicle tyres without sealant, wherein the sealant is identified optically by an operator or using a detector, in particular a photodiode, after supply of energy as a result of the at least one luminescent agent.

9. Process for recycling a pneumatic vehicle tyre according to Claim 7, comprising at least the process steps of:
A) providing the pneumatic vehicle tyre according to Claim 7;
B) performing the process according to Claim 8;
C) separating the sealant from the pneumatic vehicle tyre;
D) subsequently comminuting the pneumatic vehicle tyre without the sealant.

10. Process for recycling pneumatic vehicle tyres comprising at least the process steps of:
a) providing pneumatic vehicle tyres to be recycled;
b) performing the process according to Claim 8;
c) spatially separating pneumatic vehicle tyres comprising a sealant from pneumatic vehicle tyres without sealant;
d) recycling pneumatic vehicle tyres without sealant comprising comminution of the pneumatic vehicle tyres;
e) transferring pneumatic vehicle tyres comprising a sealant to a separate recycling process comprising separation of the sealant and has comminution of the pneumatic vehicle tyres only subsequently on the inner surface opposite the tread.

## Revendications

1. Matériau d'étanchéité auto-obturant pour pneumatique, **caractérisé en ce qu'**il contient au moins un agent luminescent.

2. Matériau d'étanchéité pour pneumatique selon la revendication 1, **caractérisé en ce que** l'agent luminescent est un agent fluorescent ou un agent phosphorescent.

3. Matériau d'étanchéité pour pneumatique selon l'une des revendications précédentes, **caractérisé en ce que** l'agent luminescent absorbe de la lumière dans la plage de longueurs d'onde de 200 à 700 nm et émet dans la plage de 350 à 800 nm.

4. Matériau d'étanchéité pour pneumatique selon l'une des revendications précédentes, **caractérisé en ce que** la quantité d'agents luminescents représente 1 à 10% en poids, par rapport à la quantité totale de matériau d'étanchéité.

5. Matériau d'étanchéité pour pneumatique selon l'une des revendications précédentes, **caractérisé en ce qu'**il contient au moins une charge, qui lui confère une nuance noire, telle qu'en particulier de la suie et/ou du graphite et/ou du graphène et/ou des nanotubes de carbone.

6. Matériau d'étanchéité pour pneumatique selon l'une des revendications précédentes, **caractérisé en ce qu'**il est basé sur la réticulation d'un caoutchouc et/ou d'une polyoléfine.

7. Pneumatique pour véhicule, qui présente le matériau d'étanchéité pour pneumatique selon l'une des revendications 1 à 6 au moins sur la face interne opposée à la bande de roulement.

8. Procédé pour la détection d'un pneumatique pour véhicule selon la revendication 7 permettant de distinguer les pneumatiques pour véhicule présentant un matériau d'étanchéité par rapport à des pneumatiques pour véhicule sans matériau d'étanchéité, le matériau d'étanchéité étant détecté optiquement, après apport d'énergie, par un opérateur ou au moyen d'un détecteur, en particulier d'une photodiode, en raison dudit au moins un agent luminescent.

9. Procédé pour le recyclage d'un pneumatique pour véhicule selon la revendication 7, comprenant au moins les étapes de procédé suivantes :
A) mise à disposition du pneumatique pour véhicule selon la revendication 7 ;
B) mise en oeuvre du procédé selon la revendication 8 ;
C) séparation du produit d'étanchéité et du pneumatique pour véhicule ;
D) broyage consécutif du pneumatique pour véhicule pour véhicule sans matériau d'étanchéité.

10. Procédé pour le recyclage de pneumatiques pour véhicule, comprenant au moins les étapes de procédé suivantes :
a) mise à disposition de pneumatiques pour véhicule à recycler ;
b) mise en oeuvre du procédé selon la revendication 8 ;
c) séparation spatiale de pneumatiques pour véhicule présentant un matériau d'étanchéité et de pneumatiques sans matériau d'étanchéité ;
d) recyclage des pneumatiques sans matériau d'étanchéité comprenant le broyage des pneumatiques pour véhicule ;
e) transfert des pneumatiques pour véhicule présentant un matériau d'étanchéité vers un procédé de recyclage séparé comprenant la séparation du matériau d'étanchéité et ne présente broyage des pneumatiques pour véhicule qu'ensuite sur la face interne opposée à la bande de roulement.
